# EUROPEAN PATENT APPLICATION

(11) **EP 1 860 516 A1**
(43) Date of publication of application: **28.11.2007**
(21) Application number: 06425349.5
(22) Date of filing: 23.05.2006
(51) Int. Cl.: G05D 16/06, F16K 31/126

(54) **Valve**

(71) Applicant: C.R.F. Società Consortile per Azioni, 10043 - Orbassano (Torino) (IT)
(72) Inventor: Mirolo, Efrem, 10043 Orbassano (IT); Delzanno, Paolo, 10043 Orbassano (IT)
(74) Representative: Jorio, Paolo

(57) **Abstract**

A valve (10) receives hydrogen under pressure, and is provided with an outlet (17) for conveying the gas at a reduced pressure to the anode (4) of a fuel-cell stack (5), and provided with a pilot member (28), which is movable for opening a valve seat (21) under the thrust of a first preloaded spring (35) against the action of the pressure of the gas at the outlet (17); a compensator (38) varies the pre-loading of the first spring (35) as a function of the pressure of the gas in a pre-defined point (39) between the outlet (17) and the anode (4); the compensator (38) has a membrane sensor member (60), which is movable in order to increase the aforesaid pre-loading under the thrust of a second spring (59) against the action of the pressure of the gas and is coupled to the first spring (35) via a mechanical lever transmission (80) .

## Description

The present invention relates to a gas-control valve, in particular for controlling supply of a fuel-cell stack for direct hydrogen, i.e., hydrogen that is stocked without it being derived (for example, from methane) via reforming processes.

As is known, the anode of a fuel-cell stack is supplied with gaseous hydrogen coming from a tank. Set upstream of the fuel-cell stack is a pressure-reduction stage for adapting the pressure itself from that of the tank (30-700 bar) to the one necessary for the anodic side of the fuel-cell stack, which normally operates with relative input pressures that vary between approximately 0.2 and 0.9 bar.

In general, the aforesaid pressure-reduction stage comprises two valves: the first one reduces the pressure down to a level of approximately 15-30 bar, whilst the second reduces the pressure further to a level compatible with operation of the fuel-cell stack.

In general, the power required by a fuel-cell stack for automotive applications varies in time. In particular, an increase in the power requirement has repercussions on an increase in the flowrate of gas consumed by the anode of the fuel-cell stack. As the consumption of gas flowrate increases, the pressure at inlet to the anode would tend to decrease, but the pressure-reduction stage is configured in such a way as to open wider the orifice through which the gas flows in order to meet the requirement of the fuel-cell stack and restore optimal pressure conditions.

In fuel-cell stacks used for motor vehicles, the power requirement and, hence, the pressure at inlet to the anode vary continuously and at a relatively fast rate according to the style of driving of the driver. In these conditions, the pressure-reduction stage of a known type has difficulties in regulating gas flow in an optimal way.

In fact, the control valves available on the market are provided with elastic membranes, which govern an open/close element, which, in turn, opens/closes a valve seat: in the presence of a marked and sudden increase in the flowrate of gas required, the valve or pressure reducer does not manage to maintain the required pressure. In addition, the elastic membrane tends to vibrate so that it generates noise and is subject to stresses that cause failure in relatively short times.

Since hydrogen has a very low density at the pressures of use, the orifices of the pressure reducer should have a large section of passage to enable passage of the flowrate of hydrogen required at each operating condition, with consequent problems of heavy weight and large overall dimensions.

In order to improve the performance of the control valves of the membrane type, maintaining, however, contained sections of passage and, hence, contained overall dimensions, it is known to apply an electric motor that varies the calibration of a spring acting on the elastic membrane so as to vary the characteristic curve of operation (defined by the profile of the pressure of the gas leaving the reducer as a function of the flowrate of the gas through the valve seat): when the required flowrate of gas increases, in order to compensate for even marked reductions in pressure an increase in the pre-loading of the aforesaid spring enables the same flowrate of gas, limiting any reduction in the output pressure.

However, the times of response in the calibration performed by this system are absolutely unsatisfactory for the automotive sector, where the variations in transient conditions are extremely fast, as explained above.

The aim of the present invention is to provide a gas-control valve, or pressure reducer, in particular for controlling supply of gaseous hydrogen to a fuel-cell stack, which will enable a simple and low-cost solution of the problems set forth above and, preferably, will have relatively small overall dimensions and a relatively long duration.

Provided according to the present invention is a gas-control valve, in particular for controlling supply of gaseous hydrogen to a fuel-cell stack, the valve comprising:
- an inlet and an outlet for the gas;
- a valve seat with variable opening to get the gas to flow from said inlet to said outlet;
- first pre-loaded elastic means;
- a first adjustment member movable for varying the pre-loading of said first elastic means;
- a pilot member movable for controlling an increase in said opening, under the thrust of said first elastic means against the action of the pressure of the gas at said outlet; and
- compensation means for regulating the position of said first adjustment member;
   said valve being characterized in that said compensation means comprise:
- a sensor member movable as a function of the pressure of the gas in a point downstream of said outlet; and
- a mechanical transmission for coupling said sensor member to said first adjustment member in order to increase the pre-loading of said first elastic means when the pressure of the gas decreases.

For a better understanding of the present invention a preferred embodiment is now described, purely by way of nonlimiting example, with reference to the attached plate of drawings, wherein:
- Figure 1 is a schematic illustration of a preferred embodiment of the gas-control valve, in particular for controlling supply of gaseous hydrogen to a fuel-cell stack, according to the present invention; and

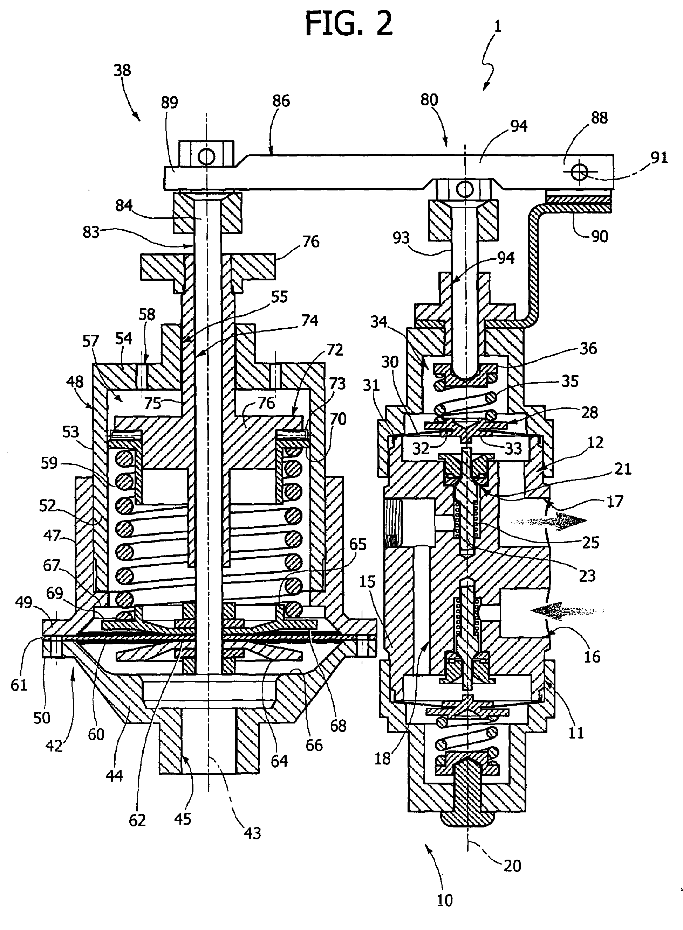

- Figure 2 is a cross section, at an enlarged scale, of the control valve of Figure 1.

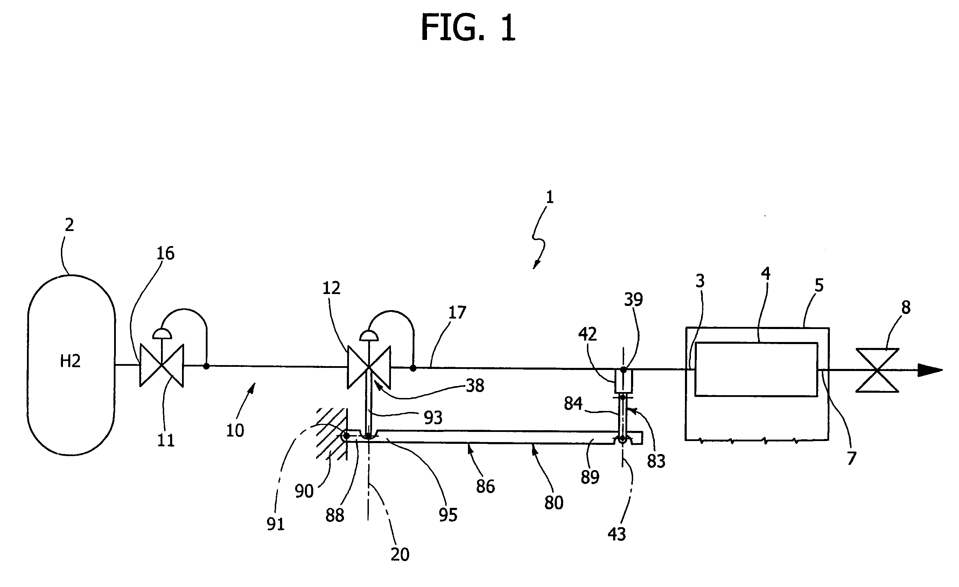

In Figure 1, the reference number 1 designates a supply pipe (illustrated schematically), which conveys gaseous hydrogen from a source 2, in particular a tank, to an inlet 3 of an anode 4 forming part of a fuel-cell stack 5, used in particular for the propulsion of motor vehicles.

The anode 4 has then an outlet 7 discharged through a purge valve 8 (illustrated schematically), which, in use, is opened to discharge water that has accumulated inside the anode 4. As an alternative to or in combination with the valve 8, a recirculation line (not illustrated and not described in detail) could be provided from the outlet 7 to the inlet 3.

With reference to the attached figures, a control valve 10 is set along the pipe 1. The valve 10 comprises two pressure-reduction stages 11, 12, set in series with respect to one another along the pipe 1, and comprises a fixed casing 15, which houses both of the stages 11, 12 and defines an inlet mouth 16 for the stage 11, permanently communicating with the source 2, and an outlet mouth 17 for the stage 12, permanently communicating with the inlet 3.

The output of the stage 11 communicates with the input of the stage 12 through a channel 18 within the casing 15. The stages 11, 12 are substantially the same as one another from the constructional standpoint, are aligned along an axis 20 and are substantially specular with respect to an ideal median plane orthogonal to the axis 20. Consequently, for reasons of simplicity, only the stage 12 will now be described.

The stage 12 comprises a valve seat 21, which sets in communication the channel 18 with the mouth 17. The stage 12 further comprises a needle open/close element 23, which extends along the axis 20, is axially movable for opening/closing the valve seat 21 and bring about a reduction in pressure in the flow of gas from the channel 18 to the mouth 17, and is subject to the opposite axial thrusts of a spring 25 and of a pilot member 28.

The member 28 comprises an elastic membrane 30, which, in turn, comprises an outer annular portion 31 fixed to the casing 15 and an inner annular portion 32 fixed to a central rigid plate 33. The plate 33 axially co-operates bearing upon one end of the needle open/close element 23 and is axially movable as a function of the elastic deformation of the membrane 30.

The member 28 separates in a fluid-tight way the mouth 17 from a chamber 34, which houses a pre-loaded spring 35, which is a helical cylindrical spring and is set so that it rests axially, on one side, against the plate 33 and, on the opposite side, against a plate 36, the axial position of which is adjustable to vary the pre-loading of the spring 35 itself.

Unlike the stage 11, the stage 12 is associated to a compensator device 38, which forms part of the valve 10 and brings about axial translation of the plate 36 automatically as a function of the pressure that the gas has in a predefined point 39 of the pipe 1 between the mouth 17 and the inlet 3, preferably a point adjacent to the inlet 3 (Figure 1). The device 38 comprises a fixed casing 42, which extends along an axis 43 parallel to the axis 20 and comprises, in turn, a body 44 substantially shaped like a truncated cone, which defines, at one end of its own, an axial opening 45 that communicates directly with the point 39, in a way not illustrated.

The casing 42 further comprises a cylindrical body 47 and a cup-shaped body 48 coaxial to the body 44. The body 47 has an end flange 49 fixed to a flange 50 of the body 44, set at the opposite axial end with respect to the opening 45, whilst the body 48 comprises a cylindrical portion 52 screwed in a fixed position within the body 47 and an outer portion 53 comprising an end wall 54, which has an internally threaded axial through hole 55.

The body 48 defines a chamber 57, which communicates with the outside environment through channels 58 made in the wall 54, houses a helical cylindrical spring 59 and is separated in a fluid-tight way from the opening 45 by a sensor member 60 defined by an elastically deformable membrane.

The membrane 60 is subjected to the opposite axial thrusts exerted by the spring 59 and by the pressure that the gas has in the opening 45 and comprises an annular portion 61 gripped between the flange 49, 50 and a central portion 62 that is axially movable according to the elastic deformation of the membrane 60.

Two dishes 64, 65 are fixed to the portion 62, on opposite axial sides of the membrane 60. The dishes 64, 65 are designed to bear axially upon respective annular contrast elements 66, 67 carried by the bodies 44 and 47, respectively, to define respective ends of travel for the portion 62 along the axis 43. In particular, the dish 65 comprises an intermediate annular portion 68, set resting against which is the spring 59, and an outer annular portion 69, which is designed to bear upon the contrast element 67.

At the opposite end with respect to the dish 65, the spring 59 is set axially resting against a ring 70, which is coupled to a regulation member 72 via the axial interposition of a rolling-contact bearing 73. The member 72 defines an axial through hole 74 and comprises an axial stem 75 screwed into the hole 55 and a contrast portion 76, which has a widened diameter, is housed in the chamber 57 and is coupled to the bearing 73. One end of the stem 75 is external to the casing 42 and carries fixed thereto a ring nut 76, which can be turned manually for screwing/unscrewing the stem 75 into/out of the hole 55 and, hence, axially displacing the member 72 so as to adjust the pre-loading of the spring 59.

The device 38 further comprises a mechanical transmission 80, which couples the portion 62 to the plate 36 in order to increase the pre-loading of the spring 35 when the pressure of the gas in the point 39 decreases.

The transmission 80 comprises a rod 83, which has one end fixed to the portion 62, extends along the axis 43 and through the hole 74, and terminates with a stretch 84 that projects from the ring nut 76.

The transmission 80 then comprises a lever 86, which is a second-class lever and comprises two opposite ends 88, 89. The end 88 is hinged to a fixed structure, in particular a bracket 90 fixed to the casing 15, to enable the lever 86 to rotate about an axis 91 orthogonal to the plane of lie of the axes 20, 43, whilst the end 89 is coupled to the stretch 84 slidably along the lever 86 and in a fixed relative position along the axis 43.

Finally, the transmission 80 comprises a rod 93, which extends along the axis 20 through a hole 94 of the casing 15. One end of the rod 93 is coupled to an intermediate portion 95 of the lever 86 slidably along the lever 86 and in a fixed relative position along the axis 20. The opposite end of the rod 93 is, instead, coupled so that it rests, head on, against the plate 36.

In use, starting from a hypothetical condition in which the valve 10 is handling a zero flowrate of gas, at the opening 45 the pressure is equal to the pressure at the inlet 3. As soon as the anode 4 starts requiring a certain flowrate of gas, the pressure downstream of the stage 12 tends to drop, so that the valve seat 21 opens, according to the characteristic curve of the stage 12 (understood as profile of the pressure of the gas at output from the stage 12 as a function of the flowrate of the gas through the valve seat 21). At the same time, the pressure tends to drop also in the chamber defined by the opening 45. Consequently, the spring 59 tends to deform the membrane 60 so as to bring the dish 64 close to the contrast element 66 and hence so as to pull the rod 83 axially towards the inside of the casing 42. In turn, the rod 83 causes rotation of the lever 86 so as to discharge the force of the spring 59 as a force of thrust along the axis 20 on the plate 36, so that the spring 35 is further compressed.

In this way, a characteristic curve of the valve 10 is obtained, which is better than that obtained in the operating condition in which the calibration of the spring 35 is invariant, i.e., a curve that is "shifted" towards higher levels of flowrate. The improvement in the characteristic curve is a function of the dimensions of the membrane 60, the stiffness of the springs 35, 59, and the lever ratio of the transmission 80.

The device 38 thus varies the calibration of the spring 59 automatically, with the advantage of having a practically instantaneous dynamics of response.

Other advantages of the valve 10 are then evident from the characteristics described above. In particular, the valve 10 is robust and is without electric or electronic components for movement and/or control, since the transmission 80 is mechanical. The valve 10 is then relatively compact, thanks to the type of transmission 80 used.

What is more, the fact of envisaging a lever transmission enables isolation in a fluid-tight way of the chamber defined by the opening 45 with respect to the stage 12 and, at the same time, amplification of the force exerted by the spring 59 on the membrane 60, consequently limiting the breath of the membrane 60 and the dimensions of the spring 59.

In addition, the device 38 is easy to assemble, thanks to the structure of the casing 42. The bearing 73 then prevents transmission of actions of torsion to the membrane 60, whilst the threaded coupling between the stem 75 and the hole 55 enables easy regulation of the pre-loading of the spring 59 after assembly of the device 38, without any risks of loading the membrane 60 excessively during assembly.

Finally, it is clear that modifications and variations can be made to the valve 10 described and illustrated herein, without thereby departing from the sphere of protection of the present invention, as defined in the annexed claims.

In particular, the mechanical transmission between the pressure-sensor member and the spring 35 could be different from the one illustrated; for example, it could include just one transmission rod, maintaining the spring 35 and the membrane 60 coaxial to one another.

Furthermore, in addition to the thrust of the spring 35, on the member 20, but on the same side on which the spring 35 acts, an additional thrust could also act due to the controllable pressure of a gas sent into a control chamber.

In addition, the membrane movable elements, designated by the reference numbers 60 and 28, could be replaced by piston-driven movable elements.

Furthermore, the two stages 11 and 12 could be divided into valves distinct from one another and set in series along the pipe 1, and/or a number of pressure-reduction stages other than two could be provided.

In addition, the lever mechanism of the transmission 80 could even be a first-class one, and/or the valve could be used for controlling a gas, in particular a fuel gas, other than hydrogen.

Furthermore, a kit could be provided and defined by the device 38 for modifying valves normally available on the market and adapting them to obtain the valve 10.

## Claims

1. A gas-control valve (10), in particular for controlling supply of gaseous hydrogen to a fuel-cell stack (5); the valve comprising:
- an inlet and an outlet (17) for the gas;
- a valve seat with variable opening (21) to get the gas to flow from said inlet to said outlet (17);
- first pre-loaded elastic means (35);
- a first adjustment member (36) movable for varying the pre-loading of said first elastic means (35);
- a pilot member (28) movable for controlling an increase in said opening, under the thrust of said first elastic means (35) against the action of the pressure of the gas in said outlet (17); and
- compensation means (38) for regulating the position of said first adjustment member (36);
said valve being **characterized in that** said compensation means (38) comprise:
- a sensor member (60) movable as a function of the pressure of the gas in a point (39) downstream of said outlet (17); and
- a mechanical transmission (80) for coupling said sensor member (60) to said first adjustment member (36) in order to increase the pre-loading of said first elastic means (35) when the pressure of the gas decreases.

2. The valve according to Claim 1, **characterized in that** said sensor member (60) is subjected to a thrust exerted by second elastic means (59), on one side, and to the action of the pressure of the gas, on the other side.

3. The valve according to Claim 1 or Claim 2, **characterized in that** said transmission (80) comprises a lever (86).

4. The valve according to Claim 3, **characterized in that** said lever (86) is a second-class lever.

5. The valve according to any one of the preceding claims, **characterized in that** said sensor member (60) and first adjustment member (36) are movable along respective axes (43, 20) parallel to one another.

6. The valve according to any one of the preceding claims, **characterized in that** said transmission (80) comprises at least one transmission rod (83), which is fixed to said sensor member (60) and has its axis (43) coinciding with the axis of displacement of said sensor member (60).

7. The valve according to Claim 6, **characterized in that** said sensor member (60) is subjected to a thrust exerted by second elastic means (59), on one side, and to the action of the pressure of the gas, on the other side; and **in that** said transmission rod (83) extends axially in a chamber (57) housing said second elastic means (59).

8. The valve according to Claim 7, **characterized in that** said transmission (80) comprises a lever (86) having a first end (88) hinged to a fixed supporting portion (90) and a second end (89) coupled to said transmission rod (83).

9. The valve according to Claim 8, **characterized in that** said transmission (80) comprises a further transmission rod (93) coupled, at one end, to an intermediate portion (95) of said lever (86) and resting, at the opposite end, against said first adjustment member (36).

10. The valve according to Claim 2, **characterized in that** said compensation means (38) comprise a second adjustment member (72) that can be actuated for varying the pre-loading of said second elastic means (59).

11. The valve according to Claim 10, **characterized in that** said compensation means (38) comprise a rolling-contact bearing (73) set between said second adjustment member (72) and said sensor member (60).

12. The valve according to Claim 11, **characterized in that** said rolling-contact bearing is set between said second elastic means (59) and said second adjustment member (72).

13. The valve according to Claim 2, **characterized in that** said sensor member (60) comprises a membrane, in turn comprising a fixed peripheral portion (61) and a movable central portion (62); said membrane separating in a fluid-tight way the gas from a chamber (57) housing said second elastic means (59).

14. The valve according to any one of the preceding claims, **characterized in that** said compensation means (38) comprise a first end-of-travel element (64) and a second end-of-travel element (65) carried, on opposite sides, by said sensor member (60) and designed to come to bear upon respective fixed contrast elements (66, 67).

15. The valve according to Claim 14, **characterized in that** said sensor member (60) is subjected to a thrust exerted by second elastic means (59), on one side, and to the action of the pressure of the gas, on the other side; said second elastic means (59) comprising a helical cylindrical spring; said first end-of-travel element (65) comprising an intermediate annular portion (68) set resting against said helical spring (59) and a projecting peripheral portion (69) designed to come to bear upon the corresponding fixed contrast element (67).

16. A kit for modifying a gas-control valve (10), in particular for controlling supply of gaseous hydrogen to a fuel-cell stack (5); the valve comprising:
- an inlet and an outlet (17) for the gas;
- a valve seat with variable opening (21) to get the gas to flow from said inlet to said outlet (17);
- first pre-loaded elastic means (35);
- a first adjustment member (36) movable for varying the pre-loading of said first elastic means (35);
- a pilot member (28) movable for controlling an increase in said opening, under the thrust of said first elastic means (35) against the action of the pressure of the gas at said outlet (17);
the kit comprising compensation means (38) for regulating the position of said first adjustment member (36) and being **characterized in that** said compensation means (38) comprise:
- a sensor member (60) movable as a function of the pressure of the gas in a point (39) downstream of said outlet (17); and
- a mechanical transmission (80) coupled to said sensor member (60) and couplable to said first adjustment member (36) in order to increase the pre-loading of said first elastic means (35) when the pressure of the gas decreases.
